# FASCICULE DE BREVET EUROPEEN

(11) **EP 2 977 868 B1**
(45) Date de publication et mention de la délivrance du brevet: **01.03.2017**
(21) Numéro de dépôt: 15178319.8
(22) Date de dépôt: 24.07.2015
(51) Int. Cl.: G06F 3/041

(54) **SÉCURISATION D'UN DISPOSITIF D'ENTRÉE DE DONNÉES**
SICHERE DATENEINGABEVORRICHTUNG
SECURE DATA INPUT DEVICE

(30) Priorité: 25.07.2014 FR 1401714
(43) Date de publication de la demande: 27.01.2016
(73) Titulaire: THALES, 92400 Courbevoie (FR)
(72) Inventeur: BIGAND, Jean-Louis, 41100 Vendome (FR); MANCEAU, Michaël, 28200 Chateaudun (FR)
(74) Mandataire: Collet, Alain

(56) Documents cités:
- WO-A1-2010/009552
- DE-A1-102012 203 831
- JP-A- 2000 311 052
- US-A1- 2004 108 995

## Description

L'invention concerne la sécurisation d'un dispositif d'entrée de données d'un système informatique. De nombreux dispositifs d'entrée de données peuvent être associés à un système informatique. La présente invention s'intéresse particulièrement aux surfaces tactiles, comme par exemple celles utilisées dans un micro ordinateur portable et bien connu sous le nom de « touchpad » pour une surface tactile sans écran ou « touchscreen » pour une surface tactile avec écran, dans la littérature anglo-saxonne. Ces surfaces peuvent être munies ou non d'un écran. Une surface tactile est généralement utilisée pour pointer un objet affiché sur un écran du système informatique. Pour ce faire, un utilisateur déplace un doigt sur la surface tactile. Le déplacement du doigt est détecté par la surface tactile et est reproduit à la surface de l'écran. L'objet pointé peut être un bouton virtuel affiché sur l'écran ou une donnée que l'utilisateur souhaite saisir. L'utilisateur peut être amené à sélectionner l'objet pointé. Cette opération de sélection peut être réalisée par un appui sur un bouton réel disposé à proximité de la surface tactile ou par un appui direct sur la surface tactile elle-même. Un interrupteur actionné par le bouton ou par l'appui sur la surface tactile génère une information électrique permettant la sélection.

L'invention trouve une utilité particulière en aéronautique pour une surface tactile appartenant à un système monté à bord d'un aéronef. Le système comprend un ou plusieurs écrans disposés sur la planche de bord de l'aéronef, un calculateur et un ou plusieurs dispositifs d'entrée de données dont par exemple une surface tactile. La surface tactile peut être utilisée pour sélectionner des paramètres de vol affichés sur l'écran du système ou plus généralement pour pointer et sélectionner des objets affichés sur l'écran du système.

L'aéronef peut être soumis à des turbulences qui risquent de perturber le pointage et la sélection des objets. Plus précisément, les turbulences génèrent des vibrations pouvant entrainer des mouvements incontrôlés des moyens de sélection. Même en l'absence de turbulences avérées, de légers phénomènes d'accélération, subis par le système, peuvent perturber la sélection d'objets pointés par la surface tactile.

La présence d'un objet comme par exemple une goutte d'eau, un insecte, un stylo, une manche de chemise ou de veste d'un opérateur sur la surface tactile dans des environnements vibratoires, peuvent suffire pour déclencher l'interrupteur de sélection.

On a tenté de sécuriser le dispositif d'entrée de données en évitant le déclenchement intempestif de l'interrupteur de sélection en ajoutant un verrouillage de l'interrupteur en série de celui-ci. Le déverrouillage de l'interrupteur est soumis à certaines conditions comme le fait que la sélection est compatible d'une zone de la surface tactile valide pour une sélection ou que le niveau vibratoire est suffisamment faible pour pouvoir activer correctement la surface tactile et l'interrupteur.

Cette solution de verrouillage présente plusieurs inconvénients comme la définition de zones prédéfinies limitant l'utilisation de la surface tactile complète, ou comme des périodes d'utilisation bloquées lors d'environnements vibratoires, chocs ou accélérations constantes importantes.

De façon plus générale, le dispositif de verrouillage est disposé en série (en amont ou en aval) de l'interrupteur et agit sur l'information électrique issue de l'interrupteur.

Le document DE 10 20122 203 831 A1 décrit une autre façon de
sécuriser un dispositif d'entrée de données en prévoyant un interrupteur supplémentaire déclenché sous l'effet d'un effort minimal.

L'invention vise à pallier tout ou partie des problèmes cités plus haut en proposant des moyens de sécurisation de l'entrée de données réalisée au moyen d'une surface tactile, ces moyens étant dissemblables et ségrégués par rapport à l'interrupteur de validation. Plus précisément, l'aspect dissemblable est obtenu au moyen d'une mesure d'un effort d'appui sur la surface tactile, la mesure n'étant pas réalisée par l'interrupteur de sélection. La ségrégation est réalisée par une mise en parallèle de la mesure d'effort par rapport à l'information électrique issue de l'interrupteur de sélection et non une mise en série comme dans les moyens de verrouillage connectés en série de l'interrupteur.

A cet effet, l'invention a pour objet un dispositif d'entrée de données selon la revendication 1.

La ségrégation et la dissemblance des deux informations, mesure d'effort et signal électrique issu de l'interrupteur de sélection permet d'éviter qu'une panne sur une chaîne générant une de ces informations entraine la panne de la chaîne associée à l'autre information.

Le fait de réaliser une comparaison à plusieurs efforts de référence distincts permet de rendre la validation plus robuste, notamment lorsque le dispositif se trouve dans un environnement vibratoire.

L'invention sera mieux comprise et d'autres avantages apparaîtront à la lecture de la description détaillée d'un mode de réalisation donné à titre d'exemple, description illustrée par le dessin joint dans lequel :
La figure 1 représente schématiquement un système informatique dans lequel l'invention est mise en oeuvre ;
la figure 2 représente schématiquement un exemple de dispositif d'entrée de données mettant en oeuvre l'invention ;
la figure 3 représente un exemple de relation entre l'effort et le déplacement dans un interrupteur appartenant au dispositif de la figure 1 ;
les figures 4a, 4b et 4c représentent l'utilisation du dispositif de la figure 1 par le doigt d'un utilisateur ;
la figure 5 représente en perspective éclatée un exemple de réalisation du dispositif de la figure 1.

Par souci de clarté, les mêmes éléments porteront les mêmes repères dans les différentes figures.

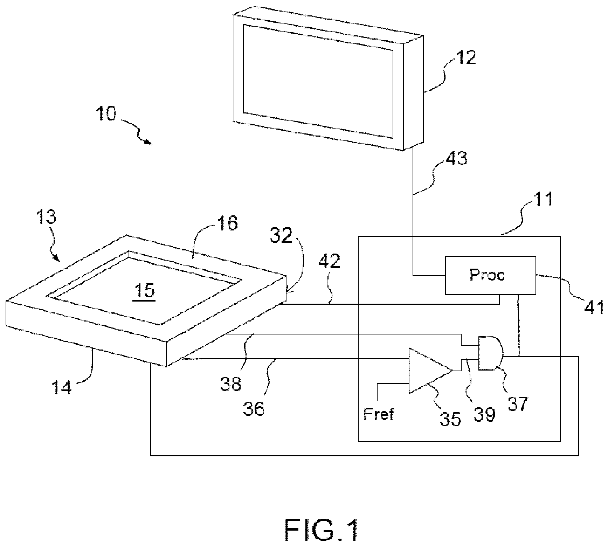

La figure 1 représente un système informatique 10 représenté schématiquement et comprenant une unité centrale ou calculateur 11, un écran 12 et un dispositif d'entrée de données 13 à surface tactile.

L'invention trouve une utilité particulière dans le domaine aéronautique et plus particulièrement dans un poste de pilotage d'un aéronef. La plupart des aéronefs sont pilotés par un pilote et un copilote. Dans le poste de pilotage plusieurs instruments de vol ou de navigation peuvent être apparentés à un système informatique. L'écran 12 est placé sur la planche de bord sous la verrière du cockpit de l'aéronef. D'autres dispositifs permettant un affichage peuvent être apparentés à un écran, tel que par exemple un projecteur permettant une visualisation tête haute pour le pilote de l'aéronef. Le calculateur 11 peut être disposé derrière la face avant de la planche de bord ou de façon déportée dans un rack prévu pour le recevoir. Ce type de rack est par exemple disposé dans une zone arrière du cockpit ou même à l'extérieur du cockpit dans un local prévu à cet effet. Le dispositif d'entrée de données 13 peut être disposé entre le pilote et le copilote, par exemple pour entrer des informations de navigation, notamment pour saisir les coordonnées des prochains points de passage que devra suivre l'aéronef. De façon plus générale, le terme « système informatique » est à interpréter au sens large dès qu'il comprend un calculateur, un écran et un dispositif d'entrée de données quelque soit la fonction remplie par le système informatique. La surface tactile 15 mise en oeuvre dans le dispositif d'entrée de donnée peut bien entendu être utilisée pour tout type de saisie qu'un utilisateur peut être amené à réaliser vers le système informatique.

Le dispositif d'entrée de données 13 comprend un corps 14 et une surface tactile 15. Le corps 14 est destiné à être posé ou fixé sur un plan de travail, non représenté. La surface tactile 15 peut affleurer une surface plane 16 du corps 14 ou être disposée de façon légèrement abaissée afin d'en distinguer tactilement les contours. La surface tactile 15 est mobile en translation par rapport au corps 14, la translation de la surface tactile 15 permettant de manoeuvrer un interrupteur 17 disposé entre la surface tactile 15 et le corps 14.

Un utilisateur déplace un doigt sur la surface tactile 15 pour désigner un objet sur l'écran 12. La surface tactile 15 comprend un ensemble de capteurs permettant de définir la position du doigt sur la surface tactile 15. La surface tactile 15 peut avoir un contour carré ou rectangulaire et l'ensemble de capteurs délivre une information de position du doigt de l'utilisateur dans un repère de la surface tactile 15 dont les axes peuvent être parallèles aux cotés de la surface tactile 15. Le déplacement du doigt de l'utilisateur sur la surface tactile 15 est traduit par un déplacement équivalent d'un pointeur sur l'écran 12. Le passage du pointeur sur un objet représenté sur l'écran permet de la désigner. Cette désignation est semblable à celle obtenue par une souris ou par un mini manche, connu dans la littérature anglo-saxonne sous le nom de : « joystick ».

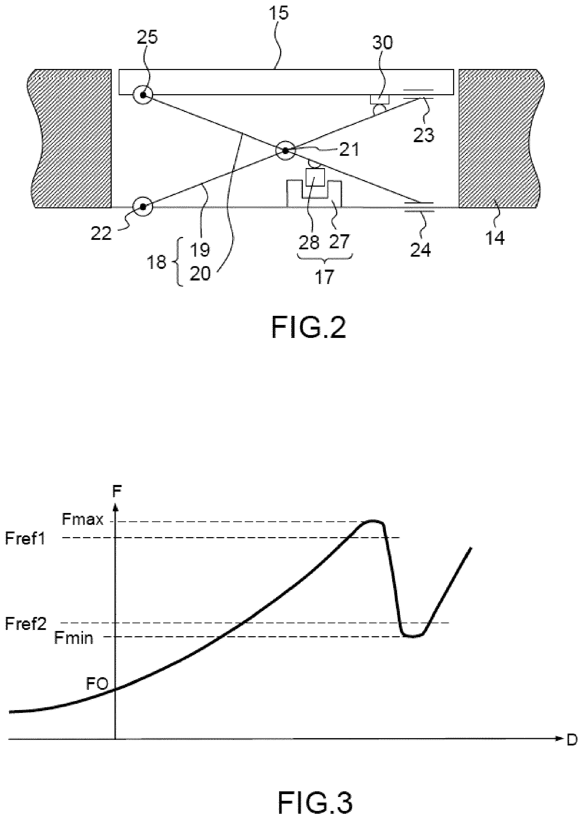

La figure 2 représente en coupe le dispositif d'entrée de données 13 dans un plan perpendiculaire à la surface tactile 15. Le dispositif d'entrée de données 13 comprend un interrupteur 17 manoeuvrable par appui sur la surface tactile 15, la manoeuvre de l'interrupteur 17 permettant de sélectionner un objet désigné par les mouvements du doigt d'un utilisateur sur la surface tactile 15. Par sélection on entend aussi validation. La sélection s'entend de toute action permettant de d'identifier un objet particulier qui a été désigné. Il peut s'agir d'un choix parmi plusieurs valeurs affichées sur l'écran 12, d'un appui sur un bouton virtuel affiché sur l'écran 12, du choix d'un point particulier d'un dessin affiché sur l'écran... L'appui sur la surface tactile 15 est réalisé par le doigt sensiblement perpendiculairement à la surface tactile 15. L'interrupteur 17 est situé sous la surface tactile 15. Il est disposé de façon être manoeuvré par enfoncement de la surface tactile 15 par rapport à la surface plane 16.

Avantageusement, le dispositif d'entrée de données 13 comprend un pantographe 18 disposé entre le corps 14 et la surface tactile 15 de façon à renvoyer tout effort exercé perpendiculairement à la surface tactile 15 vers l'interrupteur 17. Ainsi quelque soit la position du doigt d'un utilisateur sur la surface tactile 15, lorsque l'utilisateur presse de son doigt la surface tactile 15, son appui est transmis de façon uniforme vers l'interrupteur 17. Le pantographe 18 comprend par exemple deux barres rigides 19 et 20 articulées entre elle sensiblement en leur milieu 21 et permettant un degré de liberté en rotation entre elles. La barre 19 est articulée en une première de ses extrémités 22 par rapport au corps 14 en permettant un degré de liberté en rotation et est articulée en une seconde de ses extrémités 23 par rapport à la surface tactile 15 en permettant un degré de liberté en translation. La barre 20 est articulée en une première de ses extrémités 24 par rapport au corps 14 en permettant un degré de liberté en translation et est articulée en une seconde de ses extrémités 25 par rapport à la surface tactile 15 en permettant un degré de liberté en rotation. Les axes des différents degrés de liberté en rotation sont parallèles entre eux (perpendiculaires au plan de la figure 2). Les axes des deux degrés de liberté en translation sont parallèles à la surface tactile 15 et perpendiculaires aux axes des degrés de liberté en rotation. Les axes des deux degrés de libertés en translation sont dans le plan de la figure 2. L'interrupteur 17 comprend une partie fixe 27 solidaire du corps 14 et une partie mobile 28 sur laquelle une des barres, en l'occurrence la barre 20 peut appuyer lorsqu'un appui est opéré sur la surface tactile 15 par le doigt d'un utilisateur. L'interrupteur 17 peut être à double raideur comme par exemple décrit dans la demande de brevet WO 2010/049219 déposé au nom de la demanderesse. Un ressort de rappel, non représenté, peut repousser la surface tactile 15 du corps 14 dans un sens opposé à celui de l'appui par le doigt de l'opérateur. Des ressorts de compensation du poids de la surface tactile 15 peuvent également être mis en place. La position de ces ressorts est fonction de l'orientation de la surface tactile 15 par rapport à la verticale. Lors d'un appui sur la surface tactile 15, l'interrupteur 17 bascule.

Selon l'invention, le dispositif d'entrée de données 13 comprend des moyens de mesure de l'effort appliqué sur la surface tactile 15. Ces moyens de mesure sont indépendants de l'interrupteur 17.

Il est possible de disposer un capteur de force 30 entre la surface tactile 15 et le corps 14. Le capteur 30 peut être un capteur piézo-électrique disposé entre une des barres, par exemple la barre 20 et le corps 14. Il est également possible de positionner sur une des barres une jauge de déformation. Le capteur piézo-électrique ou la jauge de déformation permettent de donner une information sur la valeur de l'effort réellement exercé sur la surface tactile 15.

Alternativement, il est possible de se passer d'un capteur 30. Avantageusement, la désignation d'un objet par la surface tactile 15 et la mesure de l'effort mettent tous deux en oeuvre un même principe physique. Plus précisément, le dispositif comprend un capteur de position 32, ou un ensemble de capteurs de position, permettant de déterminer la position d'un doigt de l'utilisateur sur la surface tactile 15. Le dispositif est configuré pour que le signal issu du capteur 32 ou de l'ensemble de capteurs soit traité à la fois pour déterminer la position du doigt de l'utilisateur sur la surface tactile 15 et pour déterminer l'effort exercé sur la surface tactile 15 par l'utilisateur à la position déterminée. La double utilisation du signal permet bien entendu de réduire le coût du dispositif en réduisant le nombre de capteurs. Cette double utilisation permet surtout d'éviter que l'inertie de la surface tactile 15 ne perturbe un capteur de force 30 externe à la surface tactile lorsque le dispositif est dans un environnement vibratoire.

Par exemple, la surface tactile 15 peut être une dalle résistive. Il est alors possible d'utiliser une mesure de résistance dépendant de la pression exercée sur la dalle pour déterminer indirectement l'effort exercé sur la dalle perpendiculairement à celle-ci. De façon similaire, on peut mettre en oeuvre une dalle à effet capacitif pour réaliser la désignation. Il est possible de mesurer une capacité dépendant de l'effort exercé sur la dalle. Dans une dalle à onde de surface, un doigt posé sur la dalle absorbe une partie de l'onde de surface. L'onde est comparée à une valeur de référence. Des changements sont décelés et une coordonnée de position sur la dalle est déterminée. Cette mesure se fait suivant deux axes X et Y pour obtenir la position du doigt sur la dalle. La quantité d'onde absorbée peut également être définie suivant un axe Z perpendiculaire à la dalle. Cette quantité permet de déterminer la pression exercée sur la dalle à la coordonnée X-Y et donc l'effort exercé par le doigt.

La figure 3 représente un exemple de relation entre l'effort F et le déplacement D dans l'interrupteur 17 entre sa partie mobile 28 et sa partie fixe 27. L'interrupteur 17 peut être précontraint de façon à ce que pour un déplacement nul, l'effort F à exercer sur la partie mobile 28 ait une valeur F0 positive. A partir de ce déplacement nul, l'effort F croit jusqu'à atteindre un effort maximum Fmax. En poursuivant l'enfoncement de la partie mobile 28, l'effort F décroit. Par exemple, en mettant en oeuvre un interrupteur à dôme, cette décroissance de l'effort F correspond à l'effondrement du dôme. Le basculement de l'interrupteur 17, basculement d'un état ouvert vers un état fermé ou l'inverse, est obtenu lors de cet effondrement, ce qui assure un basculement franc. A la fin de l'effondrement, l'effort F atteint une valeur Fmin. Au-delà de cet effondrement, l'effort F croît à nouveau avec le
déplacement D.

La mesure d'effort permet de valider que le basculement de l'interrupteur 17 est bien dû à un appui sur la surface tactile 15.

Le dispositif d'entrée de données comprend un comparateur 35 d'un effort mesuré 36 par les moyens de mesure à un effort de référence Fref et des moyens de validation 37 d'un signal issu de l'interrupteur 17 en fonction du résultat de la comparaison effectuée par le comparateur 35. Autrement dit le comparateur 35 autorise la validation du basculement de l'interrupteur 17 en fonction d'une condition. De façon simple, cette condition peut être que l'effort mesuré est supérieur à l'effort de référence Fref. Il est possible de définir une condition plus complexe tel que par exemple : l'effort mesuré est compris entre deux efforts prédéfinis par rapport à 0,8 fois Fref et 4 fois Fref. Ces coefficients ne sont bien entendu donnés qu'à titre d'exemple.

Le comparateur 35 et les moyens de validation 37 peuvent appartenir au calculateur 11 ou être intégrés au corps 14. Les moyens de
validation 37 sont symbolisés par une cellule ET recevant un signal électrique 38 provenant de l'interrupteur 17 et un signal 39 issu du comparateur 35.

Les moyens de validation 37 délivrent un signal 40 à un processeur 41 qui reçoit également un signal de désignation 42 issu des capteurs de position de la surface tactile 15. Le processeur 41 traite les deux signaux et forme un signal vidéo 43 à destination de l'écran 12. Le processeur 41 génère un certain nombre d'objets affichés par l'écran 12. Le processeur 41 incruste dans les images qu'il génère une image d'un pointeur dont la position est définie par le signal de désignation 42. Ce pointeur permet la désignation d'objets affichés. La sélection de la désignation, après validation et portée par le signal 40, peut être prise en compte dans les images générées par le processeur 41.

Les fonctions remplies par le comparateur 35 et par les moyens de validation 37 peuvent être remplies par le processeur 41.

La valeur de l'effort de référence Fref peut être fixée lors de la conception du dispositif. Cette valeur est fonction de l'effort Fmax de l'interrupteur 17 retenu dans le dispositif d'entrée de données 13. La valeur de l'effort de référence Fref tient compte d'une tolérance sur la valeur réelle de l'interrupteur 17. Il est possible de définir des valeurs de l'effort de référence Fref variables en fonction des coordonnées mesurées par la surface tactile 15 elle-même. En effet, la transmission de l'effort entre la surface tactile 15 et l'interrupteur 17 peut varier en fonction de la position du doigt de l'opérateur sur la surface tactile 15. Une cartographie de l'effort de référence Fref est avantageusement établie à cet effet. Autrement dit, l'effort de référence Fref est défini en fonction de la position de l'appui sur la surface tactile 15.

Avantageusement, la valeur de l'effort de référence Fref est variable durant la durée de vie du dispositif d'entrée de données 13, notamment pour tenir compte du vieillissement de l'interrupteur 17. Il est en effet courant que les efforts Fmax et Fmin d'un interrupteur diminuent avec le nombre de basculements effectués. A cet effet, le dispositif comprend des moyens de calibration de l'effort de référence Fref en fonction d'un effort mesuré lors d'un basculement de l'interrupteur 17. Cet effort mesuré peut être Fmax ou Fmin ou éventuellement les deux. Cette fonction de calibration peut être mise en oeuvre par le processeur 41. La calibration peut par exemple intervenir sur commande d'un opérateur ou lors de chaque nouvelle mise sous tension du dispositif d'entrée de données 13. A bord d'un aéronef, la mise sous tension d'un équipement n'intervient généralement que lorsque l'aéronef est au sol. On est alors certain que l'aéronef ne subit aucune vibration qui pourrait induire un basculement intempestif de l'interrupteur 17. Après cette mise sous tension, lors du premier appui sur l'interrupteur 17, on mesure l'effort Fmax nécessaire pour réaliser le basculement de l'interrupteur 17 et on fixe la valeur de l'effort de référence Fref en fonction de cet effort mesuré et d'une tolérance.

Par ailleurs, lors d'une comparaison entre un effort mesuré et l'effort de référence Fref, ce dernier peut être fixe. Par exemple, si au moment du basculement de l'interrupteur 17, un dépassement de l'effort de référence Fref est détecté, le basculement de l'interrupteur 17 est alors validé. Il s'agit d'une validation à un instant précis, celui du basculement de l'interrupteur 17 d'un état où la surface tactile 15 est au repos vers un état où la surface tactile 15 est enfoncée. Le choix d'une comparaison instantanée à une valeur fixe de l'effort de référence Fref peut avoir quelques inconvénients. En effet, un objet inapproprié et suffisamment lourd peut tomber sur la surface tactile 15 et entrainer à la fois le basculement de l'interrupteur 17 et la validation du basculement du fait du poids de cet objet. Un environnement vibratoire peut entrainer la surface tactile 15 du fait de son inertie et manoeuvrer l'interrupteur 17. Un objet même léger posé sur la surface tactile 15 en lien avec des vibrations pourrait entrainer une validation non appropriée. Il est possible de se prémunir de ce type de situation en faisant varier la valeur de l'effort de référence Fref au cours du temps lors du basculement de l'interrupteur 17. Plus précisément, lors de l'appui sur la surface tactile 15, l'utilisateur fournit un effort dont la valeur évolue dans le temps en fonction de la courbe représentée sur la figure 3. La probabilité qu'un objet tombant sur la surface tactile 15 suive cette courbe est très faible. La progression temporelle de l'effort exercé par un utilisateur peut être très variable d'un utilisateur à l'autre. On peut définir deux courbes enveloppes entre lesquelles l'utilisateur doit se situer. Le calage temporel de ces courbes se fait par rapport au basculement de l'interrupteur 17. De façon plus simple, il est possible de distinguer les deux basculements de l'interrupteur 17, le premier basculement intervenant lors de l'appui sur la surface tactile 15 et le second basculement intervenant lors du relâchement de l'appui. L'effort résiduel exercé par l'utilisateur lors du second basculement est plus faible que l'effort exercé lors du premier basculement. Ces deux efforts de basculement peuvent être prédéfinis et servir tous deux de comparaison à un effort réel exercé sur la surface tactile 15. Autrement dit, le dispositif comprend un comparateur d'un effort mesuré par les moyens de mesure à deux efforts de référence Fref1 et Fref2 distincts, l'un correspondant à un basculement de l'interrupteur 17 lors d'un appui sur la surface tactile 15, l'autre correspondant à un basculement de l'interrupteur 17 lors d'un relâchement de l'appui sur la surface tactile 15. La validation n'est effective que si le comparateur 35 détecte successivement un effort appliqué sur la surface tactile égal au premier effort de référence Fref1 puis au second effort de référence Fref2. Il est possible d'affecter à chacun des efforts de référence une tolérance à l'intérieur de laquelle l'effort mesuré est considéré comme égal à l'effort de référence. Cette tolérance peut ne comprendre qu'une seule borne. Par exemple pour un interrupteur dont la courbe est représentée sur la figure 3, la validation peut être effective si l'effort appliqué est supérieur à Fref1 puis si l'effort appliqué est inférieur à Fref2. Il est bien entendu possible de définir d'autres séquences temporelles de comparaison en fonction du type d'interrupteur choisi. Il est possible de comparer l'effort mesuré à plus de deux efforts de référence. De façon plus générale, les moyens de validation 37 sont configurés pour valider le signal 38 issu de l'interrupteur 17 si une séquence temporelle des résultats des comparaisons à chacun des efforts de référence est conforme à une séquence temporelle de référence.

Comme précédemment, il est possible de calibrer les différents efforts de référence Fref1 et Fref2 durant la durée de vie du dispositif d'entrée de données 13.

Avantageusement, le dispositif d'entrée de données 13 comprend des moyens générant un retour sensoriel destiné à informer l'utilisateur de la sélection d'un objet. Il est important de n'informer l'utilisateur que lorsque la validation de la désignation est effective. Les moyens générant un retour sensoriel sont pilotés par les moyens de validation 37.

Le retour sensoriel peut prendre plusieurs formes, il peut être tactile. On a déjà une sensation obtenue par le basculement de l'interrupteur 17. Il est possible d'y ajouter un retour supplémentaire, lors de la validation du basculement. Lorsque l'appui sur l'interrupteur 17 est normalement fait pas l'utilisateur, le retour supplémentaire coïncide avec le basculement de l'interrupteur 17. Ce retour supplémentaire tactile peut être obtenu au moyen d'une vibration générée vers la surface tactile 15.

Le retour sensoriel peut être visuel, l'affichage du retour peut être effectué sur l'écran 12, sur la surface tactile 15, par exemple par un changement de couleur ou sur un voyant déporté.

Le retour sensoriel peut être auditif au moyen d'un son émis lors de la validation.

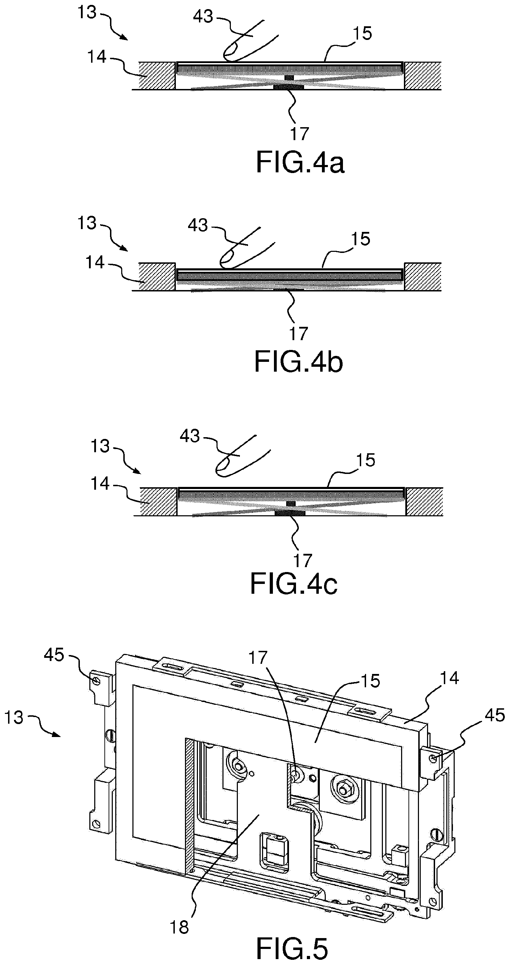

Les figures 4a, 4b et 4c représentent l'utilisation du dispositif d'entrée de données 13 par le doigt 43 d'un utilisateur. Plus précisément, sur la figure 4a, l'utilisateur positionne son doigt 43 sur la surface tactile 15. Un retour sensoriel peut éventuellement indiquer que le positionnement du doigt est correct.

Sur la figure 4b, l'utilisateur effectue un appui plus prononcé sur la surface tactile 15, qui vient activer l'interrupteur 17. Lorsque l'interrupteur 17 est activé, le dispositif d'entrée de données 13 vérifie la cohérence avec l'effort exercé par l'utilisateur sur la surface tactile 15 et active les moyens générant un retour sensoriel. On peut définir un retour sensoriel différent pour la désignation et pour la sélection réalisées par l'utilisateur au moyen de la surface tactile 15. Dans le cas d'un retour sensoriel visuel, on peut générer l'affichage d'une première couleur lorsque la désignation est effective, c'est-à-dire lorsque la surface tactile 15 détecte la présence du doigt 43 de l'utilisateur posée sur la surface tactile 15 dans la position de la figure 4a. Une seconde couleur est générée lors d'une sélection validée dans la position de la figure 4b.

Sur la figure 4c l'utilisateur relâche son appui, l'interrupteur 17 bascule vers son état de repos. Comme on l'a évoqué plus haut, ce relâchement peut être mis à profit pour la validation de la sélection au travers de la comparaison de l'effort de relâchement avec l'effort de référence Fref2 afin de vérifier que le relâchement est bien volontaire de la part de l'utilisateur.

Il est par exemple possible de vérifier qu'aucun déplacement du doigt
n'a été réalisé entre les deux mesures d'effort, correspondant aux deux basculements de l'interrupteur 17.

La figure 5 représente en perspective éclatée un exemple de réalisation du dispositif d'entrée de données 13. On y retrouve le corps 14 comprenant par exemple des moyens de fixation 45 sur un plan de travail, la surface tactile 15, l'interrupteur 17 et le pantographe 18.

## Revendications

1. Dispositif d'entrée de données d'un système informatique (10) comprenant un écran (12), le dispositif (13) comprenant une surface tactile (15) permettant de désigner un objet affiché sur l'écran (12) et un interrupteur (17) manoeuvrable par appui sur la surface tactile (15), la manoeuvre de l'interrupteur (17) permettant de sélectionner un objet désigné, comprenant en outre des moyens de mesure (30) d'un effort appliqué sur la surface tactile (15) et destiné à manoeuvrer l'interrupteur (17), les moyens de mesure (30) étant indépendants
de l'interrupteur (17), comprenant également un comparateur (35) d'un effort mesuré (36) par les moyens de mesure à plusieurs efforts de référence distincts (Fref, Fref1, Fref2) et des moyens de validation (37) d'un signal (38)
issu de l'interrupteur (17) en fonction de résultats de comparaisons effectuées par le comparateur (35) entre l'effort mesuré et les différents efforts de référence distincts (Fref, Fref1, Fref2), le dispositif (13) étant charactérisé en ce que les moyens de validation (37) sont configurés pour valider le signal (38) issu de l'interrupteur (17) si une séquence temporelle des résultats des comparaisons à chacun des efforts de référence distincts (Fref, Fref1, Fref2) est conforme à une séquence temporelle de référence.

2. Dispositif selon la revendication 1, **caractérisé en ce que** la désignation d'un objet par la surface tactile (15) met en oeuvre un principe physique et **en ce que** la mesure de l'effort met en oeuvre le même principe physique.

3. Dispositif selon l'une des revendications 1 ou 2, **caractérisé en ce qu'**il comprend un capteur de position (32) permettant de déterminer une position sur la surface tactile (15) et **en ce que** le dispositif est configuré pour qu'un signal (42) issu du capteur de position (32) soit traité à la fois pour déterminer une position sur la surface tactile (15) et pour déterminer un effort exercé sur la surface tactile (15) à la position déterminée.

4. Dispositif selon l'une des revendications précédentes, **caractérisé en ce qu'**il comprend des moyens de calibration (41) des efforts de référence (Fref, Fref1, Fref2) en fonction d'un effort (F) mesuré lors d'un basculement de l'interrupteur (17).

5. Dispositif selon l'une des revendications précédentes, **caractérisé en ce que** dit comparateur (35) compare l'effort mesuré (36)
par les moyens de mesure à deux efforts de référence (Fref1, Fref2) distincts, l'un correspondant à un basculement de l'interrupteur (17) lors d'un appui sur la surface tactile (13), l'autre correspondant à un basculement de l'interrupteur (17) lors d'un relâchement de l'appui sur la surface tactile (13).

6. Dispositif selon l'une des revendications précédentes, **caractérisé en ce que** les efforts de référence (Fref, Fref1, Fref2) sont définis en fonction de la position de l'appui sur la surface tactile (15).

7. Dispositif selon l'une des revendications précédentes, **caractérisé en ce qu'**il comprend des moyens générant un retour sensoriel destiné à informer un utilisateur de la sélection d'un objet, et **en ce que** les moyens générant un retour sensoriel sont pilotés par les moyens de validation (37).

8. Dispositif selon l'une des revendications précédentes, **caractérisé en ce qu'**il comprend en outre un corps (14), la surface tactile (15) étant mobile en translation par rapport au corps (14), la translation permettant de manoeuvrer l'interrupteur (17).

9. Dispositif selon la revendication 8, **caractérisé en ce qu'**il comprend un pantographe (18) disposé entre le corps (14) et la surface tactile (15) de façon à renvoyer tout effort exercé perpendiculairement sur la surface tactile (15) vers l'interrupteur (17).

## Patentansprüche

1. Dateneingabevorrichtung eines Computersystems (10), umfassend einen Bildschirm (12), wobei die Vorrichtung (13) eine berührungsempfindliche Oberfläche (15) umfasst, die erlaubt, ein auf dem Bildschirm (12) angezeigtes Objekt zu bezeichnen, und einen durch Drücken der berührungsempfindlichen Oberfläche (15) bedienbaren Schalter (17), wobei die Betätigung des Schalters (17) erlaubt, ein bezeichnetes Objekt auszuwählen, außerdem umfassend Messmittel (30) einer auf die berührungsempfindliche Oberfläche (15) angewendeten und dazu bestimmten Kraft, den Schalter (17) zu bedienen, wobei die Messmittel (30) unabhängig von dem Schalter (17) sind, umfassend gleichermaßen einen Komparator (35) einer bei mehreren unterschiedlichen Referenzkräften (Fref, Fref1, Fref2) durch die Messmittel gemessenen Kraft (36) und Validierungsmittel (37) eines von dem Schalter (17) als Funktion der Vergleichsergebnisse stammenden Signals (38), durchgeführt durch den Komparator (35) zwischen der gemessenen Kraft und den verschiedenen Referenzkräften (Fref, Fref1, Fref2), wobei die Vorrichtung (13) **dadurch gekennzeichnet ist, dass** die Validierungsmittel (37) konfiguriert sind, um das von dem Schalter (17) stammende Signal (38) freizugeben, wenn eine zeitliche Abfolge der Vergleichsergebnisse für jede der unterschiedlichen Referenzkräfte (Fref, Fref1, Fref2) einer zeitlichen Referenzabfolge entspricht.

2. Vorrichtung nach Anspruch 1, **dadurch gekennzeichnet, dass** die Bezeichnung eines Objekts durch die berührungsempfindliche Oberfläche (15) ein physikalisches Prinzip umsetzt und dass die Kraftmessung dasselbe physikalische Prinzip umsetzt.

3. Vorrichtung nach einem der Ansprüche 1 oder 2, **dadurch gekennzeichnet, dass** sie einen Stellungsgeber (32) umfasst, der eine Stellung auf der berührungsempfindlichen Oberfläche (15) zu bestimmen erlaubt und dass die Vorrichtung konfiguriert ist, damit ein von dem Stellungsgeber (32) stammendes Signal (42) behandelt wird, um gleichzeitig eine Stellung auf der berührungsempfindlichen Oberfläche (15) zu bestimmen und eine auf die berührungsempfindliche Oberfläche (15) ausgeübte Kraft bei der bestimmten Stellung zu bestimmen.

4. Vorrichtung nach einem der vorhergehenden Ansprüche, **dadurch gekennzeichnet, dass** sie Kalibriermittel (41) der Referenzkräfte (Fref, Fref1, Fref2) als Funktion einer gemessenen Kraft (F) anlässlich eines Umschaltens des Schalters (17) umfasst.

5. Vorrichtung nach einem der vorhergehenden Ansprüche, **dadurch gekennzeichnet, dass** der Komparator (35) die gemessene Kraft (36) durch die Messmittel mit zwei unterschiedlichen Referenzkräften (Fref1, Fref2) vergleicht, wobei die eine einem Umschalten des Schalters (17) anlässlich eines Drückens auf die berührungsempfindliche Oberfläche (13) entspricht, die andere einem Umschalten des Schalters (17) anlässlich eines Nachlassens des Drückens auf die berührungsempfindliche Oberfläche (13) entspricht.

6. Vorrichtung nach einem der vorhergehenden Ansprüche, **dadurch gekennzeichnet, dass** die Referenzkräfte (Fref, Fref1, Fref2) als Funktion der Stellung des Drückens auf die berührungsempfindliche Oberfläche (15) definiert sind.

7. Vorrichtung nach einem der vorhergehenden Ansprüche, **dadurch gekennzeichnet, dass** sie Mittel umfasst, die ein sensorisches Feedback erzeugen, das vorgesehen ist, einen Benutzer über die Auswahl eines Objekts zu informieren, und dass die Mittel, die ein sensorisches Feedback erzeugen, durch die Validierungsmittel (37) gesteuert sind.

8. Vorrichtung nach einem der vorhergehenden Ansprüche, **dadurch gekennzeichnet, dass** sie außerdem einen Körper (14) umfasst, wobei die berührungsempfindliche Oberfläche (15) bezüglich des Körpers (14) beweglich verschiebbar ist, wobei die Verschiebung die Betätigung des Schalters (17) erlaubt.

9. Vorrichtung nach Anspruch 8, **dadurch gekennzeichnet, dass** sie einen Pantographen (Storchschnabel) (18) umfasst, der zwischen dem Körper (14) und der berührungsempfindlichen Oberfläche (15) derart angeordnet ist, dass jede rechtwinklig auf die berührungsempfindliche Oberfläche (15) ausgeübte Kraft zu dem Schalter (17) geleitet wird.

## Claims

1. A data input device of a computer system (10) comprising a screen (12), the device (13) comprising a touch-sensitive surface (15) that makes it possible to designate an object displayed on the screen (12) and a switch (17) that can be manoeuvred by pressing the touch-sensitive surface (15), manoeuvring the switch (17) making it possible to select a designated object, further comprising means for measuring (30) a force applied to the touch-sensitive surface (15) and intended to manoeuvre the switch (17), the measurement means (30) being independent of the switch (17), also comprising a comparator (35) of a force (36) measured by the measurement means with a plurality of distinct reference forces (Fref, Fref1, Fref2) and means for validating (37) a signal (38) originating from the switch (17) according to results of comparisons made by the comparator (35) between the measured force and the different distinct reference forces (Fref, Fref1, Fref2), the device (13) being **characterised in that** the validation means (37) are configured to validate the signal (38) originating from the switch (17) if a temporal sequence of the results of the comparisons with each of the distinct reference forces (Fref, Fref1, Fref2) conforms with a temporal reference sequence.

2. The device according to Claim 1, **characterised in that** the designation of an object by the touch-sensitive surface (15) applies a physical principle and **in that** the measurement of the force applies the same physical principle.

3. The device according to either of Claims 1 or 2, **characterised in that** it comprises a position sensor (32) that makes it possible to determine a position on the touch-sensitive surface (15) and **in that** the device is configured so that a signal (42) originating from the position sensor (32) is processed not only to determine a position on the touch-sensitive surface (15), but also to determine a force exerted on the touch-sensitive surface (15) at the determined position.

4. The device according to any of the preceding claims, **characterised in that** it comprises means for calibrating (41) reference forces (Fref, Fref1, Fref2) according to a force (F) measured during flipping of the switch (17).

5. The device according to any of the preceding claims, **characterised in that** said comparator (35) compares the force (36) measured by the measurement means with two distinct reference forces (Fref1, Fref2), one corresponding to flipping of the switch (17) while pressing the touch-sensitive surface (13), the other corresponding to flipping of the switch (17) when the pressure on the touch-sensitive surface (13) is released.

6. The device according to any of the preceding claims, **characterised in that** the reference forces (Fref, Fref1, Fref2) are defined according to the position of the pressing on the touch-sensitive surface (15).

7. The device according to any of the preceding claims, **characterised in that** it comprises means that generate sensory feedback intended to inform a user of the selection of an object, and **in that** the means that generate sensory feedback are controlled by the validation means (37).

8. The device according to any of the preceding claims, **characterised in that** it further comprises a body (14), the touch-sensitive surface (15) being translationally moveable in relation to the body (14), the translation making it possible to manoeuvre the switch (17).

9. The device according to Claim 8, **characterised in that** it comprises a pantograph (18) disposed between the body (14) and the touch-sensitive surface (15) such as to transfer any force exerted perpendicular to the touch-sensitive surface (15) towards the switch (17).
